# EUROPÄISCHE PATENTSCHRIFT

(11) **EP 2 335 035 B1**
(45) Veröffentlichungstag und Bekanntmachung des Hinweises auf die Patenterteilung: **16.12.2020**
(21) Anmeldenummer: 09781723.3
(22) Anmeldetag: 12.08.2009
(51) Int. Cl.: G01F 23/296, G01N 9/00, G01N 11/16, G01N 29/02

(54) **VORRICHTUNG ZUR BESTIMMUNG UND/ODER ÜBERWACHUNG EINER PROZESSGRÖßE EINES MEDIUMS**
DEVICE FOR DETERMINING AND/OR MONITORING A PROCESS PARAMETER OF A MEDIUM
DISPOSITIF DE DÉTERMINATION ET/OU DE SURVEILLANCE D'UNE GRANDEUR DE PROCESSUS D'UN MILIEU

(30) Priorität: 07.10.2008 DE 102008050266
(43) Veröffentlichungstag der Anmeldung: 22.06.2011
(73) Patentinhaber: Endress+Hauser SE+Co. KG, 79689 Maulburg (DE)
(72) Erfinder: LOPATIN, Sergej, 79540 Lörrach (DE); URBAN, Martin, 79669 Zell i. W. (DE); SCHMIDT, Oliver, 77756 Hausach (DE)
(74) Vertreter: Andres, Angelika Maria
(86) Internationale Anmeldenummer: PCT/EP2009/060406
(87) Internationale Veröffentlichungsnummer: WO 2010/040582

(56) Entgegenhaltungen:
- DE-A1- 19 720 519
- FR-A- 2 572 519
- US-A- 4 734 609
- US-A- 4 783 987

## Beschreibung

Die Erfindung bezieht sich auf eine Vorrichtung zur Bestimmung und/oder Überwachung mindestens einer Prozessgröße eines Mediums, mit mindestens einer mechanisch schwingfähigen Einheit, mit mindestens einer Wandlereinheit, welche ausgehend von einem Anregungssignal die mechanisch schwingfähige Einheit zu mechanischen Schwingungen anregt und welche mechanische Schwingungen der mechanisch schwingfähigen Einheit empfängt und in ein Empfangssignal umwandelt, wobei die Wandlereinheit mindestens ein piezoelektrisches Element aufweist, mit mindestens einer Elektronikeinheit, welche die Wandlereinheit mit dem Anregungssignal beaufschlagt und welche von der Wandlereinheit das Empfangssignal empfängt, und mit mindestens einem Kompensationselement, welches die Elektronikeinheit mit dem Anregungssignal beaufschlagt und von welchem die Elektronikeinheit ein Kompensationssignal empfängt. Bei der Prozessgröße handelt es sich beispielsweise um den Füllstand, die Dichte oder die Viskosität eines Mediums in einem Behälter. Das Medium ist beispielsweise eine Flüssigkeit oder ein Schüttgut.

Im Stand der Technik sind sog. Schwinggabeln bekannt, mit welchen sich der Füllstand eines Mediums in einem Behälter überwachen lässt. Dabei wird eine mechanisch schwingfähige Einheit in Form einer Schwinggabel durch ein piezoelektrisches Wandlerelement zu Resonanzschwingungen angeregt. Zu Schwingungsanregung bzw. -empfang dienen beispielsweise zweiteilige Piezoantriebe mit je mindestens einem Sende- und Empfangspiezo (z.B. DE 39 31 453 C1) oder einteilige Piezoantriebe mit nur einem piezoelektrischen Element (z.B. DE 197 20 519 A1).

Bei der Ein-Piezo-Technologie dient ein Piezoelement sowohl als Sender, als auch als Empfänger, d.h. der Piezo, über welchen das mechanische System bei seiner Resonanz angeregt wird, nimmt auch die Schwingungen des mechanischen Systems auf. Das Anregungssignal, mit welchem der Piezo beaufschlagt wird, ist dabei beispielsweise eine rechteckförmige elektrische Wechselspannung. An den Flanken des Rechtecksignals wird die Piezokapazität umgepolt, wodurch Lade- und Entladeströme entstehen. Zudem fließt während den Impulsen ein, den mechanischen Bewegungen entsprechender elektrischer Strom. Der resultierende Strom kann über einen Messwiderstand in eine Spannung gewandelt und ausgewertet werden.

Da die Lade- und Entladeströme der Piezokapazität keine Information über die mechanische Schwingung enthalten, handelt es sich um unerwünschte Nebeneffekte, welche im Stand der Technik (siehe DE 197 20 519 A1) beispielsweise mittels eines Referenzkondensators unterdrückt werden. Dies geschieht z.B. in einer Messbrücke, bei der ein Kompensationskondensator so abgeglichen wird, dass er der Piezokapazität entspricht. Werden im Betrieb, d.h. bei der Messung, das Wandlerelement - d.h. der Piezo - und der Kompensationskondensator mit dem gleichen Anregungssignal beaufschlagt, so zeigt sich - bei gleicher Kapazität - bei beiden in Bezug auf den Umladevorgang bzw. die Umladepeaks (bzw. die Umladeströme) durch die kapazitiven Anteile das gleiche Verhalten in der jeweils abgreifbaren Spannung. Bei der von der Wandlereinheit abgreifbaren Spannung handelt es sich insbesondere um das Empfangssignal, welches somit die Lade-/Entladekurven und das eigentliche, die mechanischen Schwingungen der schwingfähigen Einheit repräsentierende Nutzsignal trägt. Werden beide Spannungen voneinander subtrahiert (oder auch bei einer Addierung nach einer vorhergehenden Invertierung), so verbleibt vom Empfangssignal nur noch das eigentliche, die Informationen über die mechanischen Schwingungen der mechanisch schwingfähigen Einheit (hier der Schwinggabel) tragende Nutzsignal.

Eine Problematik besteht bei der Verwendung eines Kompensationskondensators darin, dass dieser ein anderes Alterungs- und auch Temperaturverhalten zeigt als das piezoelektrische Wandlerelement. Meist werden für Kondensatoren Werkstoffe benutzt, welche einen relativ niedrigen Temperaturkoeffizienten der Dielektrizitätskonstanten aufweisen. Im Gegensatz dazu besitzen beispielsweise Piezowerkstoffe auf PZT-Basis (Blei-Zirkonat-Titanat) einen sehr hohen Temperaturkoeffizienten der Dielektrizitätskonstanten. Somit zeigt sich ein deutlich unterschiedliches Temperaturverhalten der jeweiligen Kapazitäten. Auch ändern sich die dielektrischen Eigenschaften von PZT-Werkstoffen mit der Zeit (Alterung). Daher kann es über die Temperatur und auch über die Zeit zu einer Verstimmung der Kompensation gemäß dem Stand der Technik kommen.

In US 4 734 609 A und FR 2 572 519 A wird ein Thermistor als Kompensationselement verwendet. In US 4 783 987 A wird ein zweiter Piezo-Kristall als Kompensationselement verwendet, wobei sein Schwingungsverhalten ausgewertet wird.

Die Aufgabe der Erfindung besteht darin, die Kompensation des Standes der Technik in Bezug auf Temperaturstabilität und vorzugsweise auch in Bezug auf Alterungseffekte des Piezowerkstoffs zu verbessern.

Die Aufgabe wird erfindungsgemäß durch die Merkmale des Anspruchs 1 gelöst, wobei das Kompensationselement mindestens ein zumindest teilweise aus einem piezoelektrischen Material bzw. Werkstoff bestehendes Element aufweist. In einer Ausgestaltung ist das Kompensationselement identisch mit dem zumindest teilweise aus einem piezoelektrischen Material, z.B. aus einer polarisierten oder unpolarisierten oder depolarisierten Piezokeramik, bestehenden Element.

Der Kompensation dient erfindungsgemäß ein Element, welches zumindest teilweise aus dem gleichen Werkstoff besteht wie das piezoelektrische Element der Wandlereinheit. Dies hat den Vorteil, dass die Temperaturkoeffizienten der Dielektrizitätskonstanten nahezu identisch sind und somit die Kompensation über die Temperatur stabil bleibt. Auch sind beide Elemente ähnlichen Alterungsprozessen unterlegen. Zudem kann das zumindest teilweise aus einem piezoelektrischen Material bestehende Element des Kompensationselements bei einer entsprechenden mechanischen Entkopplung beispielsweise in das Wandlerelement integriert werden, so dass beide Elemente nicht nur denselben Temperatureinflüssen ausgesetzt, sondern auch identisch kontaktiert sind. Für diesen Fall sind ggf. noch besondere Ausgestaltungen erforderlich, damit das Kompensationselement nicht die Bewegungen der mechanisch schwingfähigen Einheit registriert und ein davon abhängiges Signal erzeugt.

Eine Ausgestaltung beinhaltet, dass die Wandlereinheit genau ein piezoelektrisches Element aufweist. Die Wandlereinheit besteht somit aus nur einem piezoelektrischen Element, welches sowohl der Schwingungserzeugung, als auch der-detektion dient.

Eine Ausgestaltung sieht vor, dass das Kompensationselement genau ein zumindest teilweise aus einem piezoelektrischen Material bestehendes Element aufweist. Das Kompensationselement besteht somit in dieser Ausgestaltung beispielsweise aus einer polarisierten oder depolarisierten oder unpolarisierten Keramik aus einem piezoelektrischen Werkstoff, beispielsweise auf PZT-Basis oder mit Bariumtitanat.

Eine Ausgestaltung sieht vor, dass das zumindest teilweise aus einem piezoelektrischen Material bestehende Element des Kompensationselements im Wesentlichen die gleichen dielektrischen Materialeigenschaften wie das piezoelektrische Element der Wandlereinheit aufweist. In einer weiteren Ausgestaltung sind jeweils die gleichen geometrischen Dimensionen vorgesehen. In einer dazu alternativen Ausgestaltung, d.h. in dem Fall, dass unterschiedliche Dimensionierungen des zumindest teilweise aus einem piezoelektrischen Material bestehenden Elements des Kompensationselements und des piezoelektrischen Elements der Wandlereinheit gegeben sind, werden die Signale entsprechend unterschiedlich gewichtet bzw. verstärkt. Insbesondere stammen die beiden piezoelektrischen Elemente weiterhin vorzugsweise aus dergleichen Fertigungs-Charge. Das Element des Kompensationselements und das Element der Wandlereinheit haben somit in dieser Ausgestaltung im Wesentlichen die gleichen relevanten Materialeigenschaften und in einer weiteren Ausgestaltung auch die gleichen relevanten Dimensionierungen, d.h. sie verhalten sich und altern im Wesentlichen gleich.

Eine Ausgestaltung sieht vor, dass das zumindest teilweise aus einem piezoelektrischen Material bestehende Element des Kompensationselements im Wesentlichen depolarisiert oder unpolarisiert ist. In dieser Ausgestaltung führt eine Beaufschlagung des Kompensationselements mit dem Anregungssignal zu keinen mechanischen Schwingungen des zumindest teilweise aus einem piezoelektrischen Material bestehenden Elements des Kompensationselements selbst bzw. es werden in dem Kompensationselement keine elektrischen Signale/Spannungen durch die mechanischen Schwingungen erzeugt. Durch die Verwendung eines depolarisierten bzw. unpolarisierten oder eines im Wesentlichen von einer Polarisation freien Kompensationselements zeigt sich das nahezu gleiche Verhalten in Bezug auf Alterung und Temperaturabhängigkeit, so dass eine stabile Kompensation der Umfadeströme erfolgt.

Eine Ausgestaltung beinhaltet, dass das zumindest teilweise aus einem piezoelektrischen Material bestehende Element des Kompensationselements und die mechanisch schwingfähige Einheit voneinander im Wesentlichen mechanisch entkoppelt sind. Indem in dieser Ausgestaltung eine mechanische Kopplung / Kontaktierung zwischen dem durch die piezoelektrischen Eigenschaften prinzipiell mechanisch schwingungsempfindlichen/-sensitiven bzw. auch schwingungsfähigen Kompensationselement und der mechanisch schwingfähigen Einheit aufgehoben, d.h. indem eine Entkopplung gegeben ist, trägt das von dem Kompensationselement abgreifbare elektrische Signal keinerlei Information über die Schwingungen der schwingfähigen Einheit, sondern im Wesentlichen lediglich die durch seine Kapazität charakterisierte Lade-/Entladekurve. In dieser Ausgestaltung kann somit das piezoelektrische Element des Kompensationselements entweder polarisiert oder unpolarisiert sein. In einer weiteren Ausgestaltung ist das Kompensationselement derartig ausgestaltet und relativ zur mechanisch schwingfähigen Einheit angeordnet, dass die Orientierung der Polarisation des Kompensationselements relativ zur mechanisch schwingfähigen Einheit eine Entkopplung bewirkt. Beispielsweise ist die Polarisation parallel zur Membran der mechanisch schwingfähigen Einheit, auf welcher das Kompensationselement befestigt ist.

Eine Ausgestaltung sieht vor, dass das zumindest teilweise aus einem piezoelektrischen Material bestehende Element des Kompensationselements derartig ausgestaltet und mit der mechanisch schwingfähigen Einheit mechanisch gekoppelt ist, dass sich elektrische Signale, welche von durch die mechanisch schwingfähige Einheit auf das zumindest teilweise aus einem piezoelektrischen Material bestehende Element des Kompensationselements einwirkenden mechanischen Kräften erzeugt sind, im Wesentlichen gegenseitig kompensieren. In dieser Ausgestaltung erzeugen somit die mechanischen Schwingungen im piezoelektrischen Element elektrische Signale. Jedoch kompensieren sich dieses Signale gegenseitig, so dass das von dem Kompensationselement abgreifbare Gesamt-Signal frei von Auswirkungen der mechanischen Schwingungen bzw. Kräften ist. In dieser Ausgestaltung wird somit insbesondere Wert auf eine geeignete Platzierung des zumindest teilweise aus einem piezoelektrischen Material/Werkstoff bestehenden Elements des Kompensationselements gelegt. Bei einem Membranschwinger lässt sich dies beispielsweise derartig realisieren, dass das zur Kompensation verwendete piezoelektrische Element so auf der Innenseite der Membran als mechanisch schwingfähiger Einheit platziert wird, dass seine Außenfläche im Wesentlichen symmetrisch in der Mitte durch einen Nodalbereich (neutrale Linie) geteilt wird. Dies gilt für Schwingungen der zweiten Mode. Damit kompensieren sich die durch die Schwingungen im piezoelektrischen Element des Kompensationselements entstehenden elektrischen Signale. Es treten daher nur die für die Piezokapazität charakteristischen Lade-/Entladekurven auf. Dies hat den Vorteil, dass das piezoelektrische Element des Kompensationselements polarisiert werden bzw. bleiben kann und es zudem den gleichen Belastungen wie das piezoelektrische Element der Wandlereinheit ausgesetzt ist. Somit wirken Temperatur und Alterung im gleichen Maße auf das Kompensationselement wie auf die Wandlereinheit.

Eine Ausgestaltung beinhaltet, dass die mechanisch schwingfähige Einheit eine schwingfähige Membran oder ein Einstab oder eine Schwinggabel ist.

Eine Ausgestaltung sieht vor, dass es sich bei der Prozessgröße um Füllstand, Viskosität oder Dichte eines Mediums in einem Behälter handelt.

Die Erfindung wird anhand der nachfolgenden Zeichnungen näher erläutert. Es zeigt:
Fig. 1: ein schematisches Beispiel für die Anwendung eines erfindungsgemäßen Messgerätes,
Fig. 2: eine Schaltung zur Kompensation der Lade-/Entladekurven gemäß dem Stand der Technik,
Fig. 3: eine erfindungsgemäße Schaltung, und
Fign. 4a und 4b: Draufsicht und Schnitt durch die Membran eines erfindungsgemäßen Messgerätes.

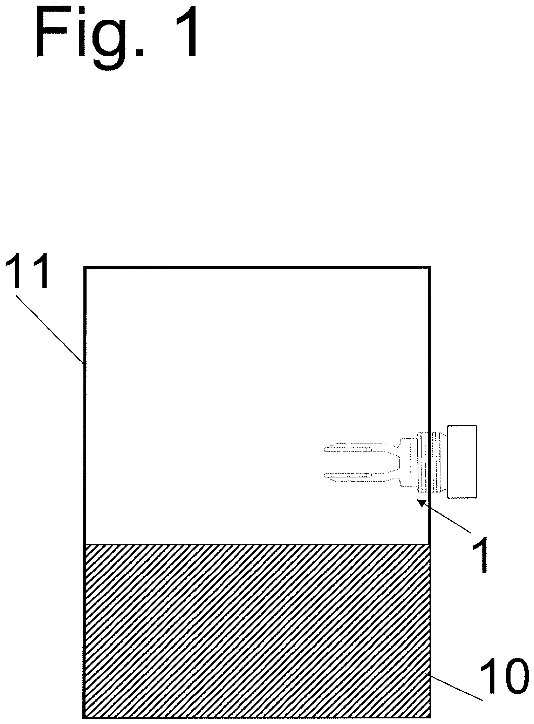

In der Fig. 1 ist schematisch die Überwachung des Füllstandes eines Mediums 10 in einem Behälter 11 mittels eines erfindungsgemäßen Messgerätes dargestellt. Die mechanisch schwingfähige Einheit 1 ist hier als Schwinggabel ausgestaltet, wobei die beiden Gabelzinken auf einer Membran befestigt sind. Die Schwingungen der mechanisch schwingfähigen Einheit 1 sind abhängig von dem Kontakt mit dem Medium und somit vom Grad der Bedeckung durch das Medium bzw. von dessen Füllstand, aber auch von den Mediumseigenschaften wie Dichte oder Viskosität Diese Prozessgrößen lassen sich entsprechend aus den Kenngrößen der Schwingungen - wie Frequenz, Amplitude oder Phase relativ zu einem Anregungssignal - ermitteln bzw. lassen sich damit Änderungen aufzeigen.

Die mechanisch schwingfähige Einheit 1 ist mechanisch mit einer Wandlereinheit gekoppelt, welche ausgehend von einem elektrischen Anregungssignal die mechanisch schwingfähige Einheit 1 zu mechanischen Schwingungen anregt und welche umgekehrt von der mechanisch schwingfähigen Einheit 1 die mechanischen Schwingungen empfängt und in ein elektrisches Empfangssignal umwandelt. Bei den Signalen handelt es sich zumeist um elektrische Wechselspannungssignale. Das Anregungssignal ist beispielsweise ein Rechtecksignal.

Im Stand der Technik ist es beispielsweise üblich, dass die Wandlereinheit aus zwei piezoelektrischen Elementen oder aus einem piezoelektrischen Element besteht. Im ersten Fall werden die Aufgaben des Sendens und Empfangens der Signale auf zwei Einheiten übertragen. Im zweiten Fall wird von einem piezoelektrischen Element sowohl die Schwingungserzeugung, als auch die Schwingungsdetektion übernommen. Dies führt dazu, dass die kapazitiven Eigenschaften des piezoelektrischen Elements sich im Empfangssignal auswirken. An den Flanken des Anregungssignals kommt es zu Umladungserscheinungen des piezoelektrischen Elements, welche sich im Empfangssignal als Lade- und Entladekurven darstellen. Diese Kurven überlagern das eigentliche Nutzsignal als Träger der Information über die Schwingungen der mechanisch schwingfähigen Einheit und sind selbst nur von den elektrischen Eigenschaften des piezoelektrischen Elements abhängig. Daher ist es vorteilhaft, diese Kurven auszublenden und nur mit dem reinen Schwingungssignal zu arbeiten.

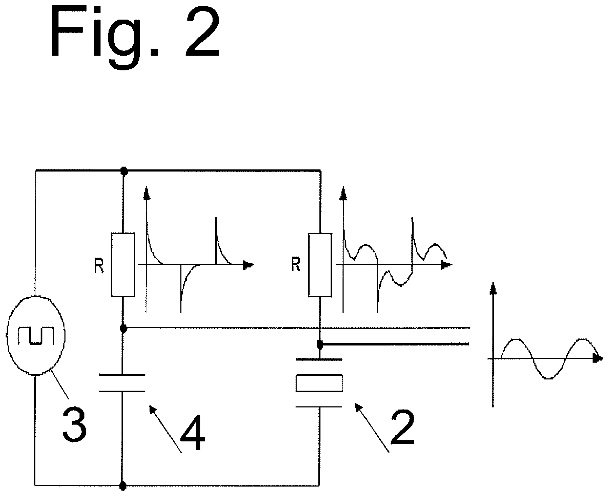

In der Fig. 2 ist eine Schaltung des Standes der Technik gezeigt, in welcher die Lade- und Entladekurven beseitigt werden.

Parallel zum piezoelektrischen Element der Wandlereinheit 2 ist hier ein Kondensator als Kompensationselement 4 vorgesehen. Von der Elektronikeinheit 3 werden die Wandlereinheit 2 und das Kompensationselement 4 mit dem gleichen Anregungssignal, z.B. einem Rechtecksignal, beaufschlagt.

Neben den Widerständen R sind in der Fig. 2 die jeweiligen abgreifbaren Spannungssignale dargestellt. Wie gut zu erkennen ist, zeigt das Spannungssignal des Kompensationselements 4 nur das typische Lade- bzw. Entladeverhalten eines Kondensators. Im Spannungsverlauf über die Wandlereinheit 2 zeigt sich die Überlagerung des eigentlichen sinusförmigen Schwingungssignals der mechanisch schwingfähigen Einheit mit den Lade- und Entladekurven. Hat der Kondensator des Kompensationselements 4 die gleiche Kapazität wie das piezoelektrische Element der Wandlereinheit 2, so weisen beide die gleichen Lade- und Entladekurven auf. Daher weist eine Differenz der beiden Signale nur noch das eigentliche Nutzsignal in Form des von den Schwingungen der mechanisch schwingfähigen Einheit abhängigen Sinussignals auf. Auch diese Differenz ist hier dargestellt. In einer alternativen Ausgestaltung im Stand der Technik werden beide Signale, nachdem ein Signal invertiert wurde, addiert.

Der Nachteil dieses Verfahrens im Stand der Technik besteht darin, dass die Kapazitäten der Wandlereinheit 2 und des der Kompensation dienenden Kondensators 4 nicht immer identisch sind. So zeigen sich unterschiedliche Alterungsverhalten und auch unterschiedliche Abhängigkeiten von der Temperatur. Daher ist die Kompensation nur in einem gewissen Rahmen stabil.

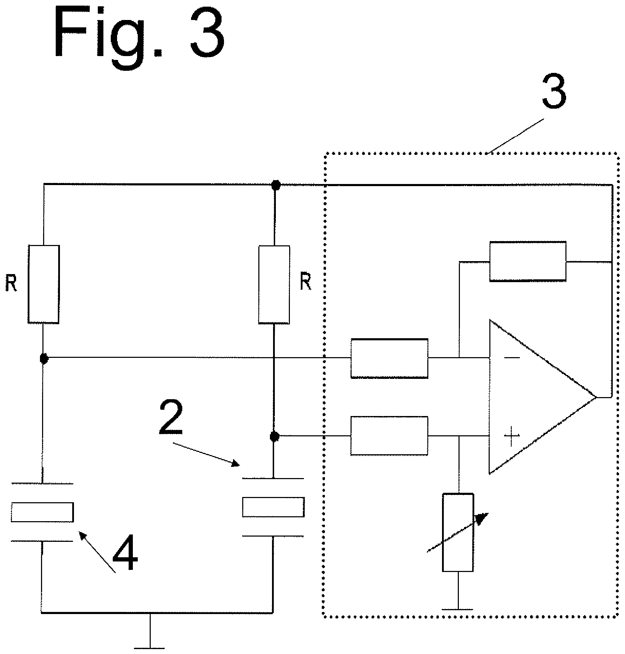

In der Fig. 3 ist ein Beispiel für die Umsetzung der Erfindung dargestellt. Das Kompensationselement 4 besteht hier - wie die Wandlereinheit 2 - nur aus einem Element, welches aus einem piezoelektrischen Material bzw. Werkstoff besteht. Insbesondere sind die beiden Elemente des Kompensationselements 4 und der Wandlereinheit 2 aus dem gleichen Werkstoff und sind vorzugsweise auch aus der gleichen Fertigungs-Charge. Vorzugsweise sind beide piezoelektrischen Elemente 2, 4 im Wesentlichen am gleichen Ort angebracht, d.h. sind sie den gleichen Umgebungstemperaturen und Belastungen ausgesetzt.

In der hier dargestellten Elektronikeinheit 3 gelangen die von den beiden piezoelektrischen Elementen 2, 4 abgegriffenen Spannungssignale auf einen Differenzverstärker. Die beiden Signale werden hier somit voneinander subtrahiert, so dass nur das sinusförmige und die Informationen über die Schwingungen der mechanisch schwingfähigen Einheit, mit welcher das Wandlerelement mechanisch gekoppelt ist, tragende Nutzsignal übrig bleibt. Dieses Signal wird dann auch einer - hier nicht dargestellten - Auswertung zugeführt. Weiterhin wird das Signal verstärkt als Anregungssignal der Wandlereinheit 2 und dem Kompensationselement 4 wieder zugeführt. In einer alternativen Ausgestaltung werden das Empfangssignal und das Kompensationssignal getrennt in der Elektronikeinheit 3 ausgewertet und verarbeitet.

Bezüglich der Ausgestaltung und Anbringung des Kompensationselements 4, welches in einer Ausgestaltung insbesondere nur aus einem piezoelektrischen Element besteht, ist darauf zu achten, dass das von dem Kompensationselement 4 abgreifbare Signal, welches der Kompensation dient, unbeeinflusst von den mechanischen Schwingungen selbst ist. D.h. das Kompensationssignal sollte nur die Lade- bzw. Entladekurven tragen.

Vorteilhafterweise wird somit das Kompensationselement durch Ausgestaltung und Anbringung der gleichen Temperatur und möglichst auch der gleichen mechanischen Belastung wie die Wandlereinheit ausgesetzt. Gleichzeitig sollte jedoch das Signal des Kompensationselements unabhängig von den mechanischen Schwingungen der mechanisch schwingfähigen Einheit sein.

In einer Ausgestaltung ist daher das piezoelektrische Element des Kompensationselements 4 depolarisiert bzw. unpolarisiert. In einer weiteren Ausgestaltung ist das Kompensationselement 4 mechanisch von der mechanisch schwingfähigen Einheit entkoppelt, z.B. durch eine entsprechendes Dämpfungselement oder durch eine im Wesentlichen kontaktlose Anbringung.

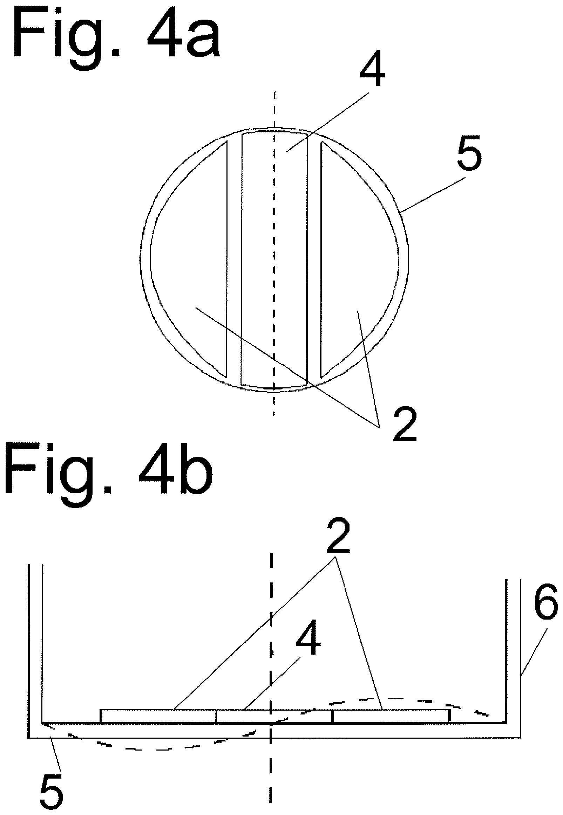

In den Figuren 4a und 4b ist eine dritte Variante dargestellt.

Die Fig. 4a zeigt eine Draufsicht auf die kreisförmige Membran 5 einer erfindungsgemäßen Messvorrichtung. Das piezoelektrische Element der Wandlereinheit 2 besteht aus zwei zu einer Mittenachse der Membran 5 symmetrisch ausgestalteten Halbkreisflächen. Die beiden Teilflächen dienen jeweils sowohl als Erzeuger und als Empfänger der mechanischen Schwingungen. Mittig zwischen diesen Teilflächen ist das als piezoelektrisches Element ausgestaltete Kompensationselement 4 angeordnet. Das piezoelektrische Element 4 ist rechteckförmig ausgestaltet, wobei die schmalen Seiten entsprechend der Membran 5 abgerundet sind. Das Kompensationselement 4 ist in sich symmetrisch zu der gestrichelt eingezeichneten Mittenachse der Membran 5 angeordnet und ausgestaltet. In diesem Nodalbereich wird somit das Kompensationselement 4 entlang dieser neutralen Linie quasi in zwei exakt gleichgroße Teilelemente "geteilt". Dies hat den Vorteil, dass die Auswirkungen der Schwingungen der mechanisch schwingfähigen Einheit auf das Kompensationselement 4 sich gegenseitig in dem Fall kompensieren, dass die mechanisch schwingfähige Einheit Schwingungen der zweiten Mode ausführt. Die Ausgestaltung und Anbringung des Kompensationselements 4 hängt auch davon ab, welche Schwingungsmode angeregt wird.

In der Fig. 4b ist ein Schnitt durch das Gehäuse 6 und die Membran 5 dargestellt. Gestrichelt ist die Mittensenkrechte der Membran 5 eingetragen, welche somit senkrecht auf der in der Fig. 4a eingezeichneten Mittenachse der Membran 5 steht. Weiterhin ist eine Schwingungsbewegung der Membran 5 stark übertrieben gestrichelt eingezeichnet. Wie gut zu erkennen ist, erfährt eine Hälfte des Kompensationselement 4 eine Bewegung nach innen und die andere Hälfte eine Bewegung nach außen, d.h. die durch die mechanische Bewegung in dem Kompensationselement 4 erzeugten Spannungen werden gerade gegeneinander kompensiert, so dass das von dem Kompensationselement 4 abgreifbare Spannungssignal unabhängig von den mechanischen Schwingungen ist.

Das piezoelektrische Element des Kompensationselements 4 und das piezoelektrische Element der Wandlereinheit 2 befinden sich auf einer Ebene und sind beide über die Membran 5 in nahem Kontakt mit dem Medium.

Bei der mechanisch schwingfähigen Einheit handelt es sich hier als Beispiel nur um eine Membran, welche an dem Gehäuse 6 angebracht ist und dieses in einer Seite abschließt, d.h. dargestellt ist ein sog. Membran-Schwinger.

### Bezugszeichenliste

- 1: Mechanisch schwingfähige Einheit
- 2: Wandlereinheit
- 3: Elektronikeinheit
- 4: Kompensationselement
- 5: Membran
- 6: Gehäuse
- 10: Medium
- 11: Behälter

## Patentansprüche

1. Vorrichtung zur Bestimmung und/oder Überwachung mindestens einer Prozessgröße eines Mediums,
mit mindestens einer mechanisch schwingfähigen Einheit (1),
mit mindestens einer Wandlereinheit (2),
welche ausgehend von einem Anregungssignal die mechanisch schwingfähige Einheit (1) zu mechanischen Schwingungen anregt und weiche mechanische Schwingungen der mechanisch schwingfähigen Einheit (1) empfängt und in ein Empfangssignal umwandelt,
wobei die Wandlereinheit (2) mindestens ein piezoelektrisches Element aufweist, mit mindestens einer Elektronikeinheit (3),
welche die Wandlereinheit (2) mit dem Anregungssignal beaufschlagt und welche von der Wandlereinheit (2) das Empfangssignal empfängt,
und
mit mindestens einem Kompensationselement (4),
welches die Elektronikeinheit (3) mit dem Anregungssignal beaufschlagt und von welchem die Elektronikeinheit (3) ein Kompensationssignal empfängt,
**dadurch gekennzeichnet,**
**dass** das Kompensationselement (4) mindestens ein zumindest teilweise aus einem piezoelektrischen Material bestehendes Element aufweist, welches zumindest teilweise aus dem gleichen Werkstoff besteht wie das piezoelektrische Element der Wandlereinheit,
**dass** das Kompensationselement (4) derartig ausgestaltet und angebracht ist, dass das Kompensationssignal von den mechanischen Schwingungen der schwingfähigen Einheit unbeeinflusst ist und nur durch eine Kapazität des Kompensationselements charakterisierte Lade- und Entladekurven trägt
und
**dass** die Elektronikeinheit (3) aus dem Empfangssignal und dem Kompensationssignal durch Subtraktion des Empfangssignals und des Kompensationssignals voneinander ein Nutzsignal extrahiert, welches nur die Information über die Schwingungen der mechanisch schwingfähigen Einheit trägt.

2. Vorrichtung nach Anspruch 1,
**dadurch gekennzeichnet,**
**dass** die Wandlereinheit (2) genau ein piezoelektrisches Element aufweist.

3. Vorrichtung nach Anspruch 1 oder 2,
**dadurch gekennzeichnet,**
**dass** das Kompensationselement (4) genau ein zumindest teilweise aus einem piezoelektrischen Material bestehendes Element aufweist.

4. Vorrichtung nach einem der Ansprüche 1 bis 3,
**dadurch gekennzeichnet,**
**dass** das zumindest teilweise aus einem piezoelektrischen Material bestehende Element des Kompensationselements (4) im Wesentlichen die gleichen dielektrischen Materialeigenschaften wie das piezoelektrische Element der Wandlereinheit (2) aufweist.

5. Vorrichtung nach einem der Ansprüche 1 bis 4,
**dadurch gekennzeichnet,**
**dass** das piezoelektrische Element der Wandlereinheit (2) und das zumindest teilweise aus einem piezoelektrischen Material bestehende Element des Kompensationselements (4) im Wesentlichen aus dem gleichen piezoelektrischen Material bestehen.

6. Vorrichtung nach einem der Ansprüche 1 bis 5,
**dadurch gekennzeichnet,**
**dass** das zumindest teilweise aus einem piezoelektrischen Material bestehende Element des Kompensationselements (4) im Wesentlichen depolarisiert oder unpolarisiert ist.

7. Vorrichtung nach einem der Ansprüche 1 bis 6,
**dadurch gekennzeichnet,**
**dass** das zumindest teilweise aus einem piezoelektrischen Material bestehende Element des Kompensationselements (4) und die mechanisch schwingfähige Einheit (1) voneinander im Wesentlichen mechanisch entkoppelt sind.

8. Vorrichtung nach einem der Ansprüche 1 bis 7,
**dadurch gekennzeichnet,**
**dass** das zumindest teilweise aus einem piezoelektrischen Material bestehende Element des Kompensationselements (4) derartig ausgestaltet und mit der mechanisch schwingfähigen Einheit (1) mechanisch gekoppelt ist, dass sich elektrische Signale, weiche von durch die mechanisch schwingfähige Einheit (1) auf das zumindest teilweise aus einem piezoelektrischen Material bestehende Element des Kompensationselements (4) einwirkenden mechanischen Kräften erzeugt sind, im Wesentlichen gegenseitig kompensieren.

9. Vorrichtung nach einem der Ansprüche 1 bis 8,
**dadurch gekennzeichnet,**
**dass** die mechanisch schwingfähige Einheit (1) eine schwingfähige Membran oder ein Einstab oder eine Schwinggabel ist.

10. Vorrichtung nach einem der Ansprüche 1 bis 9,
**dadurch gekennzeichnet,**
**dass** es sich bei der Prozessgröße um Füllstand, Viskosität oder Dichte eines Mediums in einem Behälter handelt.

## Claims

1. Apparatus designed to determine and/or monitor at least a process variable of a medium,
with at least one unit capable of vibrating mechanically (1),
with at least one transducer unit (2),
which, based on an excitation signal, causes the unit capable of vibrating mechanically (1) to produce mechanical vibrations and which receives mechanical vibrations of the unit capable of vibrating mechanically (1) and converts them to a reception signal,
wherein the transducer unit (2) has at least a piezoelectric element, with at least an electronic unit (3),
wherein said electronic unit applies the excitation signal to the transducer unit (2) and receives the reception signal from the transducer unit (2), and
with at least a compensation element (4),
wherein said element applies the excitation signal to the electronic unit (3) and wherein the electronic unit (3) receives a compensation signal from said element,
**characterized in that**
the compensation element (4) has at least an element at least partially consisting of a piezoelectric material, which is at least partially made from the same material as the piezoelectric element of the transducer unit,
the compensation element (4) is designed and mounted in such a way that the compensation signal is not influenced by the mechanical vibrations of the unit capable of vibrating mechanically and only provides charging and discharging curves **characterized by** a capacitance of the compensation element
and
in that the electronic unit (3) extracts a useful signal from the reception signal and the compensation signal by subtracting the reception signal and the compensation signal from one another, said signal only carrying the information about the vibrations of the unit capable of vibrating mechanically.

2. Apparatus as claimed in Claim 1,
**characterized in that**
the transducer unit (2) comprises precisely one piezoelectric element.

3. Apparatus as claimed in Claim 1 or 2,
**characterized in that**
the compensation element (4) comprises precisely one element at least partially made from a piezoelectric material.

4. Apparatus as claimed in one of the Claims 1 to 3,
**characterized in that**
the element of the compensation element (4) that is at least partially made from a piezoelectric material essentially has the same dielectric material properties as the piezoelectric element of the transducer unit (2).

5. Apparatus as claimed in one of the Claims 1 to 4,
**characterized in that**
the piezoelectric element of the transducer unit (2) and the element of the compensation element (4) that is at least partially made from a piezoelectric material are essentially made from the same piezoelectric material.

6. Apparatus as claimed in one of the Claims 1 to 5,
**characterized in that**
the element of the compensation element (4) that is at least partially made from a piezoelectric material is essentially depolarized or unpolarized.

7. Apparatus as claimed in one of the Claims 1 to 6,
**characterized in that**
the element of the compensation element (4) that is at least partially made from a piezoelectric material and the unit capable of vibrating mechanically (1) are essentially mechanically decoupled from one another.

8. Apparatus as claimed in one of the Claims 1 to 7,
**characterized in that**
the element of the compensation element (4) that is at least partially made from a piezoelectric material is designed and mechanically coupled to the unit capable of vibrating mechanically (1) in such a way that electrical signals, which are generated by mechanical forces acting by means of the unit capable of vibrating mechanically (1) on the element of the compensation element (4) that is at least partially made from a piezoelectric material, essentially mutually compensate one another.

9. Apparatus as claimed in one of the Claims 1 to 8,
**characterized in that**
the unit capable of vibrating mechanically (1) is a membrane that can vibrate or a single rod or a tuning fork.

10. Apparatus as claimed in one of the Claims 1 to 9,
**characterized in that**
the process variable is a level, viscosity or density of a medium in a vessel.

## Revendications

1. Dispositif destiné à la détermination et/ou à la surveillance d'au moins une grandeur de process d'un produit,
avec au moins une unité apte à vibrer mécaniquement (1),
avec au moins une unité de transducteur (2),
laquelle unité excite, à partir d'un signal d'excitation, l'unité apte à vibrer mécaniquement (1) en vibrations mécaniques et laquelle unité reçoit les vibrations mécaniques de l'unité apte à vibrer mécaniquement (1) et les convertit en un signal de réception,
l'unité de transducteur (2) comportant au moins un élément piézoélectrique, avec au moins une unité électronique (3),
laquelle unité électronique applique le signal d'excitation à l'unité de transducteur (2) et laquelle unité électronique reçoit le signal de réception de l'unité de transducteur (2), et
avec au moins un élément de compensation (4),
lequel élément applique le signal d'excitation à l'unité électronique (3) et duquel l'unité électronique (3) reçoit un signal de compensation,
**caractérisé**
**en ce que** l'élément de compensation (4) comprend au moins un élément constitué au moins partiellement d'un matériau piézoélectrique, lequel élément est constitué au moins partiellement du même matériau que l'élément piézoélectrique de l'unité de transducteur,
**en ce que** l'élément de compensation (4) est conçu et monté de telle manière que le signal de compensation n'est pas influencé par les vibrations mécaniques de l'unité apte à vibrer et ne véhicule que des courbes de charge et de décharge **caractérisées par** une capacité de l'élément de compensation
et
en ce que l'unité électronique (3) extrait un signal utile du signal de réception et du signal de compensation en soustrayant l'un de l'autre le signal de réception et le signal de compensation, ledit signal utile ne véhiculant que les informations relatives aux vibrations de l'unité apte à vibrer mécaniquement.

2. Dispositif selon la revendication 1,
**caractérisé**
**en ce que** l'unité de transducteur (2) comprend exactement un élément piézoélectrique.

3. Dispositif selon la revendication 1 ou 2,
**caractérisé**
**en ce que** l'élément de compensation (4) comprend exactement un élément constitué au moins partiellement d'un matériau piézoélectrique.

4. Dispositif selon l'une des revendications 1 à 3,
**caractérisé**
**en ce que** l'élément de l'élément de compensation (4), qui est constitué au moins partiellement d'un matériau piézoélectrique, présente sensiblement les mêmes propriétés de matériau diélectrique que l'élément piézoélectrique de l'unité de transducteur (2).

5. Dispositif selon l'une des revendications 1 à 4,
**caractérisé**
**en ce que** l'élément piézoélectrique de l'unité de transducteur (2) et l'élément de l'élément de compensation (4) constitué au moins partiellement d'un matériau piézoélectrique sont pour l'essentiel constitués du même matériau piézoélectrique.

6. Dispositif selon l'une des revendications 1 à 5,
**caractérisé**
**en ce que** l'élément de l'élément de compensation (4), qui est constitué au moins partiellement d'un matériau piézoélectrique, est pour l'essentiel dépolarisé ou non polarisé.

7. Dispositif selon l'une des revendications 1 à 6,
**caractérisé**
**en ce que** l'élément de l'élément de compensation (4), lequel est constitué au moins partiellement d'un matériau piézoélectrique, et l'unité apte à vibrer mécaniquement (1) sont pour l'essentiel découplés mécaniquement l'un de l'autre.

8. Dispositif selon l'une des revendications 1 à 7,
**caractérisé**
**en ce que** l'élément de l'élément de compensation (4), constitué au moins partiellement d'un matériau piézoélectrique, est conçu et couplé mécaniquement à l'unité apte à vibrer mécaniquement (1) de telle manière que les signaux électriques générés par les forces mécaniques agissant par l'intermédiaire de l'unité apte à vibrer mécaniquement (1) sur l'élément de l'élément de compensation (4) constitué au moins partiellement d'un matériau piézoélectrique, se compensent pour l'essentiel mutuellement.

9. Dispositif selon l'une des revendications 1 à 8,
**caractérisé**
**en ce que** l'unité apte à vibrer mécaniquement (1) est une membrane apte à vibrer ou une monotige ou une fourche vibrante.

10. Dispositif selon l'une des revendications 1 à 9,
**caractérisé**
**en ce que**, concernant la grandeur de process, il s'agit du niveau, de la viscosité ou de la densité d'un produit dans un réservoir.
